# EUROPÄISCHE PATENTSCHRIFT

(11) **EP 0 356 638 B1**
(45) Veröffentlichungstag und Bekanntmachung des Hinweises auf die Patenterteilung: **13.01.1993**
(21) Anmeldenummer: 89110776.5
(22) Anmeldetag: 14.06.1989
(51) Int. Cl.: B01D 3/10

(54) **Lösungsmittelaufbereitungsanlage**
Device for recycling a solvent
Dispositif pour la récupération du dissolvant

(30) Priorität: 31.08.1988 CH 3249/88
(43) Veröffentlichungstag der Anmeldung: 07.03.1990
(73) Patentinhaber: MEIER, René, CH-6005 Luzern (CH)
(72) Erfinder: MEIER, René, CH-6005 Luzern (CH)
(74) Vertreter: Reichmuth, Hugo Werner

(56) Entgegenhaltungen:
- EP-A- 0 069 663
- CH-A- 658 853
- CH-A- 666 194
- NL-C- 111 846

## Beschreibung

Die Erfindung betrifft eine Lösungsmittelaufbereitungsanlage, welche aus einem mit einem Mikrowellengenerator ausgestatteten, eine Zuleitung für die aufzubereitende Waschlösung aufweisenden Vakuumverdampfer, an dessen Abdampfleitung ein Kondensator und eine Vakuumpumpe nacheinander angeschlossen sind, besteht und bei welcher im Vakuumverdampfer ein mit einem mikrowellenneutralen Abfallsack ausgekleideter, eine Waschlösung aufnehmender, mikrowellenneutraler Rückstandsbehälter angeordnet ist.

Mit dem CH-Patent Nr. 658 853 A5 ist unter anderem eine Vakuumverdampfungsanlage für die Aufbereitung und Rückgewinnung von Lösungsmitteln bekanntgeworden, mittels welcher aus fett-, farb- oder harzverschmutzten Waschlösungen die Lösungsmittel durch Eindampfprozesse zurückgewonnen werden. Der im Vakuumverdampfer herrschende Unterdruck saugt die Waschlösung in einen Verdampfungsraum ein, wo die Lösungsmittel bei niedriger Temperatur verdampft werden. Der Lösungsmitteldampf wird durch eine Vakuumpumpe gegen Atmosphäre verdichtet und in einem Kondensationsraum eines Wärmetauschers zu vollwertigem Lösungsmittel verflüssigt. Die im unteren Teil des Vakuumverdampfers sich ansammelnden Rückstände werden in einem noch zähflüssigen Zustand von Zeit zu Zeit abgelassen und dem Abfall zugeführt.

Ein Nachteil dieser Anlage liegt darin, dass die Lösungsmittel nicht vollständig den Rückständen entzogen werden können, einerseits um keinen zusätzlichen übermässig grossen Leistungsaufwand mit konventionellen Mitteln für die Verdampfung der letzten Lösungsmittelreste zu betreiben, anderseits damit die Rückstände einigermassen fliessfähig bleiben um noch aus dem unteren Teil des Vakuumverdampfers abgelassen werden zu können.

Mit einer weiteren CH-Patentschrift Nr. 666 194 ist eine Regenerierungseinrichtung bekanntgeworden, bei welcher aus Industrieabluft mit Hilfe eines Trägerstoffes Schadstoffe entzogen werden. Der Trägerstoff nimmt in einem ständigen Kreislauf die Schadstoffe aus der Industrieabluft auf, um sie in einer Vakuumverdampfungsanlage bei niedriger Temperatur wieder abzugeben. Eine im Trägerstoff noch verbleibende Restmenge an Schadstoffen wird durch einen nachgeschalteten Mikrowelleneinsatz ohne grossen Energieaufwand praktisch gänzlich aus dem Trägerstoff verdampft. Während die gereinigte Abluft an die Umwelt abgeht, wird der Abdampf von einer Vakuumpumpe abgezogen, gegen Atmosphäre verdichtet, in einem Kondensator kondensiert und als flüssiges Lösungsmittel angesammelt.

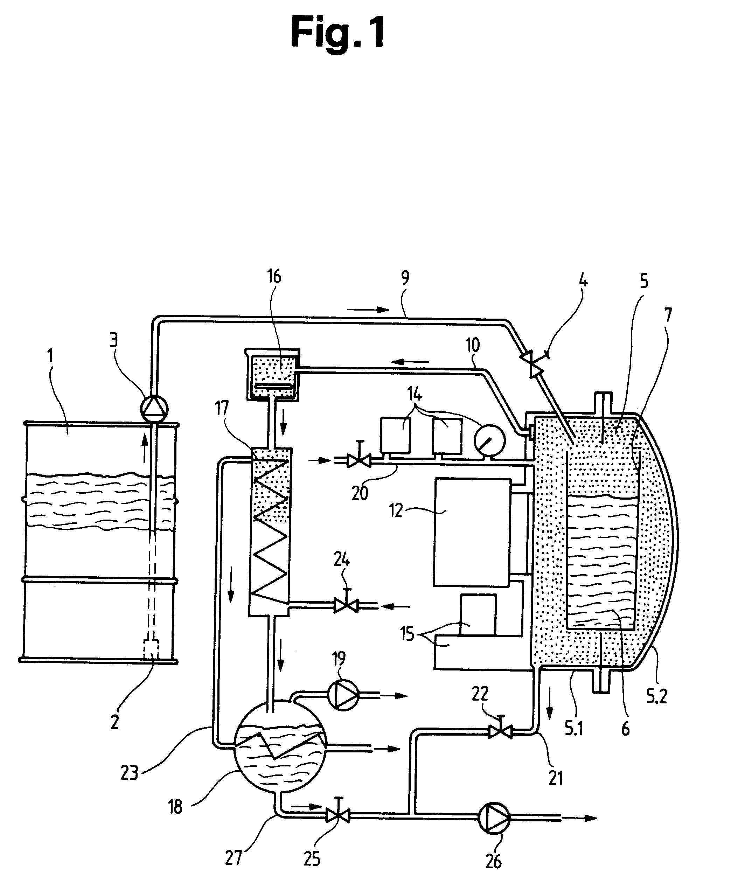

Eine Kombination der beiden bekannten Anlagen, bei welcher einer Lösungsmittel-Aufbereitungsanlage nach 1) ein Mikrowellengenerator nach 2) zugeordnet wird, und bei welcher aus den fett-, farb- oder harzverschmutzten Waschlösungen im Vakuumverdampfungsraum direkt in einem mit einem mikrowellenneutralen Abfallbeutel ausgekleideten Behälter die Lösungsmittel zurückgewonnen werden, ist im praktischen Einsatz und in Fig. 1 als Stand der Technik dargestellt. Die Rückstände der Waschlösungen können bei dieser Anlage bis zum harten Block reduziert werden.

Ein Nachteil dieser Anlage liegt aber darin, dass ein Teil der verdampften Lösungsmittel bereits an den Wandungen des Verdampfungsraumes kondensieren.

Der Erfindung liegt die Aufgabe zugrunde, eine Lösungsmittelaufbereitungsanlage derart zu verbessern, dass bei gleichzeitiger Verbilligung des Verdampfergehäuses die Lösungsmitteldämpfe nicht bereits an den Wandungen des Verdampfungsraumes kondensieren.

Diese Aufgabe wird durch die im ersten Anspruch gekennzeichnete Erfindung gelöst.

Die durch die Erfindung erreichten Vorteile sind im wesentlichen darin zu sehen, dass die Lösungsmitteldämpfe sich in einem separaten, von den Wandungen des Verdampfers distanzierten, mit einem Deckel abgeschlossenen, mikrowellenneutralen Behälter befinden und, ohne die Wandungen des Verdampfers zu berühren, von der Vakuumpumpe abgesogen werden. Eine Kondensation an den Wandungen des Verdampfers findet nicht mehr statt. Das Vakuum im Verdampfungsraum bildet zudem um den Behälter eine kostengünstige Isolation, in welcher sich die Mikrowellen besser verteilen können, wodurch sich unabhängig von der Aussentemperatur eine Leistungssteigerung einstellt. Da die teilweise aggressiven Lösungsmitteldämpfe keinen direkten Kontakt mit den Wandungen des Verdampfers haben, kann dieser statt in rostsicherem Stahl, aus normalen Stahlblechen, lediglich nach rein statischen Grundsätzen, gefertigt werden.

Auf beiliegender Zeichnung ist ein Ausführungsbeispiel der Erfindung dargestellt, das im folgenden näher erläutert wird. Es zeigen:
Fig. 1 eine schematische Darstellung einer Lösungsmittel-Aufbereitungsanlage, wie sie zum Stand der Technik gehört und
Fig. 2 eine schematische Darstellung der erfindungsgemässen Anlage.

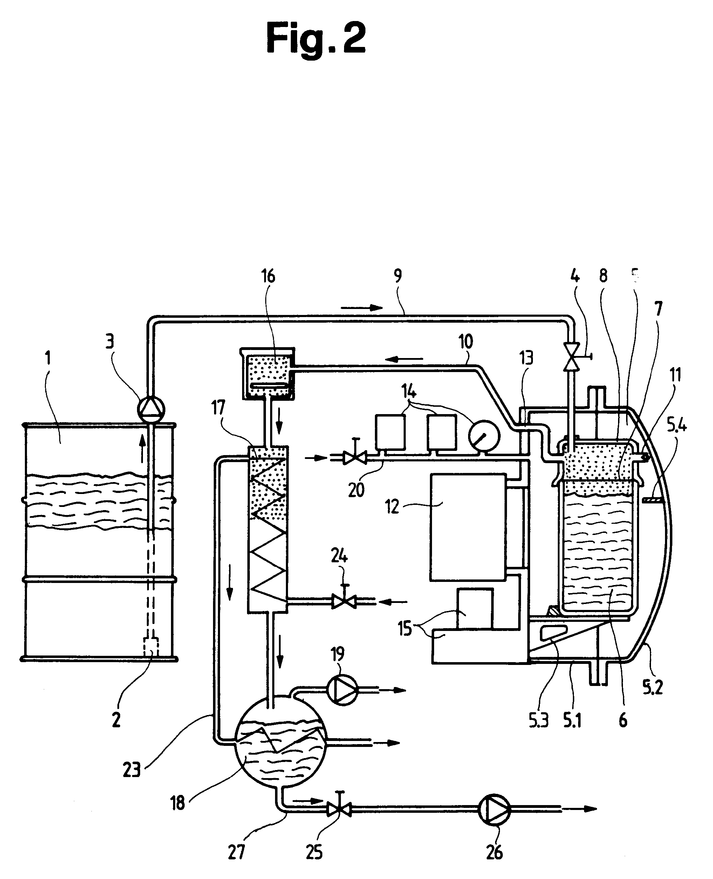

In den Fig. 1 und 2 ist mit 1 ein Fass für die Aufnahme einer fett-, farb- oder harzverschmutzten Waschlösung bezeichnet. Die Waschlösung wird mit Hilfe eines Ansaugstutzens 2 und einer Dosierpumpe 3 über eine Zuleitung 9 und ein Ventil 4 in einen Vakuumverdampfer 5 geleitet. In Fig. 1 ist in diesem Vakuumverdampfer 5 ein oben offener Rückstandsbehälter 6 angeordnet, welcher mit einem mikrowellenneutralen Abfallsack 7 ausgekleidet ist. Der Vakuumverdampfer 5 besteht aus einem Gehäuse 5.1 und einem am Gehäuse 5.1 mit Scharnieren schwenkbar gelagerten Deckel 5.2. Am Gehäuse 5.1 fest angeschlossen sind die Zuleitung 9 für die verschmutzte Waschlösung, eine Abdampfleitung 10, eine Leitung 20 mit Kontrolleinrichtungen 14 für die Überwachung des Vakuums im Vakuumverdampfer 5 sowie eine Ablaufleitung 21 mit einem Entleerungsventil 22 für eventuell im Verdampfungsraum kondensiertes und sich ansammelndes Lösungsmittel. In Fig. 2 ist in diesem Vakuumverdampfer 5 ein Rückstandsbehälter 6 auf einer am Gehäuse 5.1 des Vakuumverdampfers 5 angeordneten Konsole 5.3 aufgesetzt und durch einen am Deckel 5.2 des Vakuumverdampfers 5 befestigten Zentrierstütze 5.4 gesichert. Der Rückstandsbehälter 6 ist mit einem offenen, mikrowellenneutralen Abfallsack 7 ausgelegt, wobei die Öffnung des Sackes um den oberen Rand des Rückstandsbehälters 6 gelegt und durch einen den Rückstandsbehälter 6 abschliessenden Deckel 8 ringsum gesichert ist. Die Zuleitung 9 für die verschmutzte Waschlösung mündet in den Deckel 8 des Rückstandsbehälters 6, ebenso die mit einer Vakuumpumpe 19 verbundene Abdampfleitung 10 und ein Druckausgleichsventil 11. Auf beiden Fig. 1 und 2 ist auf der Rückseite des Gehäuses 5.1 des Vakuumverdampfers 5 ein Mikrowellengenerator 12 angeordnet, dessen Mikrowellen in den Vakuumverdampfer 5 und durch den mikrowellenneutralen Rückstandsbehälter 6 und dessen Deckel 8 geleitet werden. Mindestens in der Abdampfleitung 10 ist eine Mikrowellensperre 13 eingebaut. Kontrolleinrichtungen 14 überwachen das Vakuum im Vakuumverdampfer 5. Weitere Kontrollorgane 15 überwachen das Minimalniveau und die Temperatur in einem Leerlaufschutzbehälter. An der Abdampfleitung 10 ist ein Filter 16, ein Kondensator 17, ein Lösungsmittelbehälter 18 und die Vakuumpumpe 19 angeschlossen. Kühlwasser gelangt über ein Magnetventil 24 in eine durch den Kondensator 17 und den Lösungsmittelbehälter 18 hindurchgeführte Kühlwasserleitung 23. Für die Entleerung des im Lösungsmittelbehälter 18 aufgefangenen sauberen Lösungsmittels ist eine Entleerungsleitung 27 mit einem Entleerungsventil 25 und einer Pumpe 26 vorgesehen.

Die vorstehend beschriebene Lösungsmittelaufbereitungsanlage arbeitet wie folgt: Fett-, farb- oder harzverschmutzte Waschlösungen werden in Fässern 1 gesammelt und der Lösungsmittelaufbereitungsanlage zugeführt, und zwar werden für die nachfolgende, einwandfreie Rückgewinnung der Lösungsmittel, verschiedene Waschlösungen in verschiedenen Fässern 1 gelagert. Mit dem in ein einzelnes Fass 1 eingeführten Ansaugstutzen 2 und der Dosierpumpe 3 gelangt die Waschlösung durch die Zuleitung 9 und das Ventil 4 in den Rückstandsbehälter 6. Im Vakuumverdampfer 5 wird durch die Vakuumpumpe 19 ein Vakuum erzeugt, wodurch zusammen mit dem Mikrowellengenerator bei niedriger Temperatur aus der Waschlösung das Lösungsmittel verdampft wird. Eine Druckausgleichseinrichtung 11, ein Druckausgleichsventil oder ein zwischen dem Rückstandsbehälter 6 und dem Deckel 8 vorgesehener Luftspalt dient dazu, dass im Vakuumverdampfer 5 und im geschlossenen Rückstandsbehälter 6 der gleiche Druck herrscht. Der erzeugte Abdampf sammelt sich im geschlossenen Raum, der durch den Deckel 8 und das Niveau der in den Rückstandsbehälter 6 eingefüllten Waschlösung sich bildet und wird über die Leitung 10 und das Filter 16 in den Kondensator 17 gezogen. Hier kondensieren die Dämpfe an den Wandungen des Kondensators 17 und an den Kühlschlangen der Kühlwasserleitung 23 und fliessen als Lösungsmittel fortlaufend in den Lösungsmitteltank 18. Das um den geschlossenen Rückstandsbehälter 6 gebildete Vakuum dient gleichzeitig als kostengünstige Isolation für die Verdampfung im Innern des Rückstandsbehälters 6 und gestattet zudem eine bessere Verteilung der Mikrowellen. Die Mikrowellen durchdringen gleichmässig den gesamten Rückstand im Rückstandsbehälter 6, wobei das Lösungsmittel vollständig verdampft und ein harter Rückstandsblock übrigbleibt. Zum Entsorgen wird nach dem Stillsetzen der Anlage der Vakuumverdampfer 5 geöffnet. Der Deckel 5.2 des Vakuumverdampfers 5 wird entriegelt und ausgeschwenkt, wobei der Rückstandsbehälter 6 frei zugänglich ist. Der Deckel 8 des Rückstandsbehälters 6 wird ebenfalls entriegelt und auf dem Rohr der Zuleitung 9 nach oben geschoben und der Rückstandsbehälter 6 mit den Rückständen aus dem Verdampfer entfernt. Der blockartige Rückstand kann zusammen mit dem mikrowellenneutralen Abfallsack 7 aus dem Rückstandsbehälter 6 gezogen und mit verschnürtem Sack dem Abfall übergeben werden. Für eine weitere neue Charge wird der Rückstandsbehälter 6 mit einem neuen mikrowellenneutralen Abfallsack 7 ausgekleidet, auf die Konsole 5.3 in den Vakuumverdampfer 5 gestellt und mit dem Deckel 8 des Rückstandsbehälters 6 wieder verschlossen. Der eingeschwenkte und verriegelte Deckel 5.2 des Vakuumverdampfers 5 zentriert mit der Zentrierstütze 5.4 den Rückstandsbehälter 6; die Anlage ist wieder einsatzbereit.

## Patentansprüche

1. Lösungsmittelaufbereitungsanlage, welche aus einem mit einem Mikrowellengenerator (12) ausgestatteten, eine Zuleitung (9) für die aufzubereitende Waschlösung aufweisenden Vakuumverdampfer (5), an dessen Abdampfleitung (10) ein Kondensator (17) und eine Vakuumpumpe (19) nacheinander angeschlossen sind, besteht und bei welcher im Vakuumverdampfer (5) ein mit einem mikrowellenneutralen Abfallsack (7) ausgekleideter, eine Waschlösung aufnehmender, mikrowellenneutraler Rückstandsbehälter (6) angeordnet ist,
**dadurch gekennzeichnet,**
dass ein die Zuleitung (9) und die Abdampfleitung (10) aufnehmender, eine Druckausgleicheinrichtung (11) aufweisender, von den Wandungen des Vakuumverdampfers (5) allseitig distanzierter, geschlossener Rückstandsbehälter (6) vorhanden ist.

2. Lösungsmittelaufbereitungsanlage nach Anspruch 1,
**dadurch gekennzeichnet,**
dass am Rückstandbehälter (6) ein die Zuleitung (9), die Abdampfleitung (10) und die Druckausgleichseinrichtung (11) aufweisender Deckel (8) angeordnet ist.

3. Lösungsmittelaufbereitungsanlage nach Anspruch 2,
**dadurch gekennzeichnet,**
dass der Deckel (8) auf dem Rückstandsbehälter (6) aufklemmbar angeordnet ist.

4. Lösungsmittelaufbereitungsanlage nach Anspruch 2,
**dadurch gekennzeichnet,**
dass mindestens die Abdampfleitung (10) im Vakuumverdampfer (5) flexibel ist.

5. Lösungsmittelaufbereitungsanlage nach Anspruch 2,
**dadurch gekennzeichnet,**
dass der Deckel (8) mindestens an der Zuleitung (9) schiebbar geführt ist.

6. Lösungsmittelaufbereitungsanlage nach Anspruch 1,
**dadurch gekennzeichnet**,
dass der Rückstandsbehälter (6) auf einen am Gehäuse (5.1) des Vakuumverdampfers (5) angeordneten Konsole (5.3) zentriert aufgesetzt und durch eine am Deckel (5.2) des Vakuumverdampfers (5) angeordnete Zentrierstütze (5.4) in einer Schliessstellung des Vakuumverdampfers (5) gesichert ist.

7. Lösungsmittelaufbereitungsanlage nach Anspruch 1,
**dadurch gekennzeichnet**,
dass mindestens in der Abdampfleitung (10) eine Mikrowellensperre (13) angeordnet ist.

8. Lösungsmittelaufbereitungsanlage nach Anspruch 3,
**dadurch gekennzeichnet**,
dass der offene Oberteil des mikrowellenneutralen Abfallsackes (7) zwischen dem Rand des Rückstandsbehälters (6) und dem Rand des Deckels (8) am ganzen Umfang festgeklemmt ist.

9. Lösungsmittelaufbereitungsanlage nach Anspruch 2,
**dadurch gekennzeichnet**,
dass die Druckausgleichseinrichtung (11) ein zwischen dem Rückstandsbehälter (6) und dem Deckel (8) vorgesehener Luftspalt ist.

## Claims

1. Preparation plant for solvent, which consists of a vacuum evaporator (5), which is equipped with a microwave generator (12), has a feed duct (9) for the wash solution to be prepared and at the exhaust duct (10) of which a condensor (17) and a vacuum pump (19) are connected one after the other, and in which plant a residue container (6), which is inert to microwaves, receives a wash solution and is lined with a waste sack (7) inert to microwaves, is arranged in the vacuum evaporator (5), characterised thereby, that a closed residue container (6), which receives the feed duct (9) and exhaust duct (10), has a pressure equalising facility (11) and is spaced at all sides from the walls of the vacuum evaporator (5), is present.

2. Preparation plant for solvent according to claim 1, characterised thereby, that a lid (8) including the feed duct (9), the exhaust duct (10) and the pressure equalising facility (11), is arranged at the residue container (6).

3. Preparation plant for solvent according to claim 2, characterised thereby, that the lid (8) is arranged on the residue container (6) to be clampable.

4. Preparation plant for solvent according to claim 2; characterised thereby, that at least the exhaust duct (10) in the vacuum evaporator is flexible.

5. Preparation plant for solvent according to claim 2, characterised thereby, that the cover (8) is slidably guided at least at the feed duct (9).

6. Preparation plant for solvent according to claim 1, characterised thereby, that the residue container (6) is centrally placed on a bracket (5.3) arranged at the housing (5.1) of the vacuum evaporator (5) and is secured in a closing setting of the vacuum evaporator (5) by a centring spigot (5.4) arranged at the cover (5.2) of the vacuum evaporator (5).

7. Preparation plant for solvent according to claim 1, characterised thereby, that a microwave barrier (13) is arranged at least in the exhaust duct (10).

8. Preparation plant for solvent according to claim 3, characterised thereby, that the open upper part of the waste sack (7) inert to microwaves is firmly clamped at the entire circumference between the edge of the residue container (6) and the edge of the lid (8).

9. Preparation plant for solvent according to claim 2, characterised thereby, that the pressure equalising facility (11) is an air gag provided between the residue container (6) and the lid (8).

## Revendications

1. Installation de traitement de solvant comprenant un évaporateur sous vide (5) qui est équipé d'un générateur de micro-ondes (12), qui possède une conduite d'amenée (9) pour la solution de lavage à traiter et à la conduite de vapeur d'échappement (10) duquel sont reliés successivement un condensateur (17) et une pompe à vide (19), pour laquelle il est prévu, dans l'évaporateur sous vide (5), un collecteur de résidus (6) neutre par rapport au micro-ondes, couvert d'un sac à déchets (7) neutre par rapport aux micro-ondes, et recueillant une solution de lavage, caractérisée en ce qu'il est prévu un collecteur de résidus fermé (6) recevant la conduite d'amenée (9) et la conduite de vapeur d'échappement (10), possédant un dispositif d'équilibre de pression (11) et éloigné, de tous les côtés, des parois de l'évaporateur sous vide (5).

2. Installation de traitement de solvant selon la revendication 1, caractérisée en ce qu'il est prévu, au niveau du collecteur de résidus (6), un couvercle (8) comportant la conduite d'amenée (9), la conduite de vapeur d'échappement (10) et le dispositif d'équilibre de pression (11).

3. Installation de traitement de solvant selon la revendication 2, caractérisée en ce que le couvercle (8) est disposé, apte à être serré, sur le collecteur de résidus (6).

4. Installation de traitement de solvant selon la revendication 2, caractérisée en ce que la conduite de vapeur d'échappement (10), au moins, est flexible dans l'évaporateur sous vide (5).

5. Installation de traitement de solvant selon la revendication 2, caractérisée en ce que le couvercle (8) est guidé de façon coulissante au moins au niveau de la conduite d'amenée (9).

6. Installation de traitement de solvant selon la revendication 1, caractérisée en ce que le collecteur de résidus (6) est placé de façon centrée sur une console (5.3) disposée au niveau de l'enveloppe (5.1) de l'évaporateur sous vide (5), et assujetti dans une position de fermeture de celui-ci par un support de centrage (5.4) disposé au niveau du couvercle (5.2) de l'évaporateur sous vide (5).

7. Installation de traitement de solvant selon la revendication 1, caractérisée en ce qu'un barrage de micro-ondes (13) est disposé au moins dans la conduite de vapeur d'échappement (10).

8. Installation de traitement de solvant selon la revendication 3, caractérisée en ce que la partie supérieure ouverte du sac à déchets (7) neutre par rapport aux micro-ondes est fixée par serrage, au niveau de toute la circonférence, entre le bord du collecteur de résidus (6) et le bord du couvercle (8).

9. Installation de traitement de solvant selon la revendication 2, caractérisée en ce que le dispositif d'équilibre de pression (11) consiste en une fente d'aération prévue entre le collecteur de résidus (6) et le couvercle (8).
